# EUROPEAN PATENT APPLICATION

(11) **EP 1 811 171 A2**
(43) Date of publication of application: **25.07.2007**
(21) Application number: 06124289.7
(22) Date of filing: 17.11.2006
(51) Int. Cl.: F03D 7/02, F03D 11/00, F03D 11/04

(54) **Systems and methods for damping the oscillations of a wind turbine tower**

(30) Priority: 18.11.2005 US 283093
(71) Applicant: General Electric Company, Schenectady, NY 12345 (US)
(72) Inventor: RIESBERG, Andre, 49134, Wallenhorst (DE); SCHRAM, Christian, 80339, Munchen (DE); GURK, Mathias, 49545, Tecklenburg (DE); LUEHN, Holger, 49835, Wietmarschen (DE)
(74) Representative: Bedford, Grant Richard

(57) **Abstract**

A method for damping a displacement of a wind turbine tower (104) includes controlling a frequency of oscillation of the wind turbine tower by coupling one of a first beam (222) and a water tank (352) to a plurality of surfaces (226, 228, 230) inside the wind turbine tower.

## Description

This invention relates generally to a wind turbine and more particularly to systems and methods for damping a displacement of a wind turbine tower.

Undesired oscillations may occur in a wind turbine tower of a wind turbine used for power generation. Whether the undesired oscillations occur is dependent on a design of the wind turbine tower and a plurality of meteorological conditions.

The undesired oscillations may cause a load on the wind turbine tower and other parts of the wind turbine, which may be the cause of fatigue damage and lifetime reduction, as damage in the wind turbine tower slowly grows ultimately leading to a stoppage of the wind turbine. The undesired oscillations also add an uncertainty factor to predictions of effects of the load on the wind turbine.

In one aspect according to the present invention, a method for damping a displacement of a wind turbine tower is provided. The method includes controlling a frequency of oscillation of the wind turbine tower by coupling one of a first beam and a water tank to a plurality of surfaces inside the wind turbine tower.

In another aspect, a system for damping a displacement is provided. The system includes a wind turbine tower including a plurality of surfaces, and a processor configured to control a frequency of oscillation of the wind turbine tower by coupling one of a first beam and a water tank to the plurality of surfaces inside said wind turbine tower.

In yet another aspect, a wind turbine is provided. The wind turbine includes a wind turbine tower including a plurality of surfaces, a nacelle supported by the wind turbine tower, a wind rotor including at least one blade and coupled to the nacelle, and a processor configured to control a frequency of oscillation of the wind turbine tower by coupling one of a first beam and a water tank to the plurality of surfaces inside the wind turbine tower.

Various aspects and embodiments of the present invention will now be described in connection with the accompanying drawings, in which:
Figure 1 is a diagram of an embodiment of a wind turbine.
Figure 2 is a diagram of an embodiment of a system including a nacelle, a tower , and a hub of the wind turbine of Figure 1.
Figure 3 is a diagram of another embodiment of a wind turbine.
Figure 4 is a diagram of yet another embodiment of a wind turbine.
Figure 5 is a graph illustrating an effect of wind on a prior art wind turbine tower that does not include a beam.
Figure 6 is a graph illustrating an effect of wind on the tower of the wind turbine of Figure 1 when the tower includes the beam.
Figure 7 is a diagram of an embodiment of a wind turbine.
Figure 8 is a diagram of another embodiment of a wind turbine.
Figure 9 is an embodiment of a system for damping a displacement of the tower of Figure 1.
Figure 10 is another embodiment of a system for damping a displacement of the tower of Figure 1.
Figure 11 is another embodiment of a system for damping a displacement of the tower of Figure 1.
Figure 12 is yet another embodiment of a system for damping a displacement of the tower of Figure 1.
Figure 13 is still another embodiment of a system for damping a displacement of the tower of Figure 1.

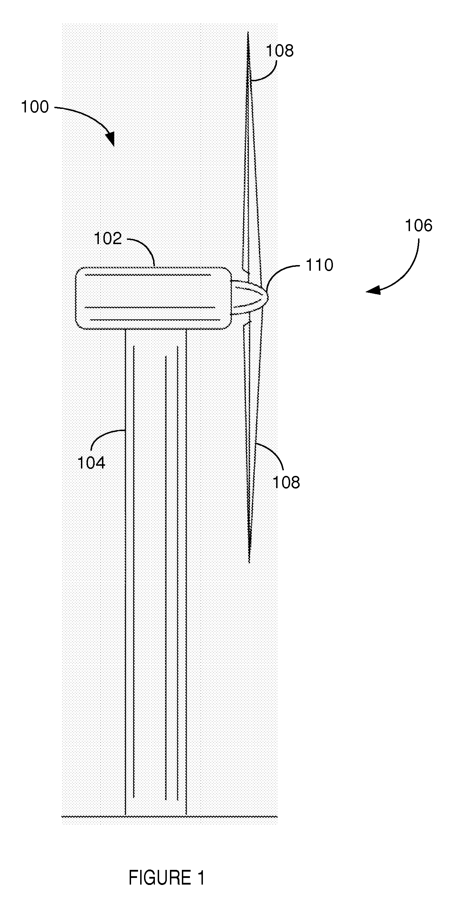

Figure 1 is a diagram of an embodiment of a wind turbine 100. Wind turbine 100 includes a nacelle 102, a tower 104, a rotor 106 having at least one rotor blade 108 and a rotating hub 110. Examples of tower 104 include a lattice tower and a tubular tower. Nacelle 102 is mounted atop tower 104, a portion of which is shown in Figure 1. Rotor blades 108 are attached to hub 110.

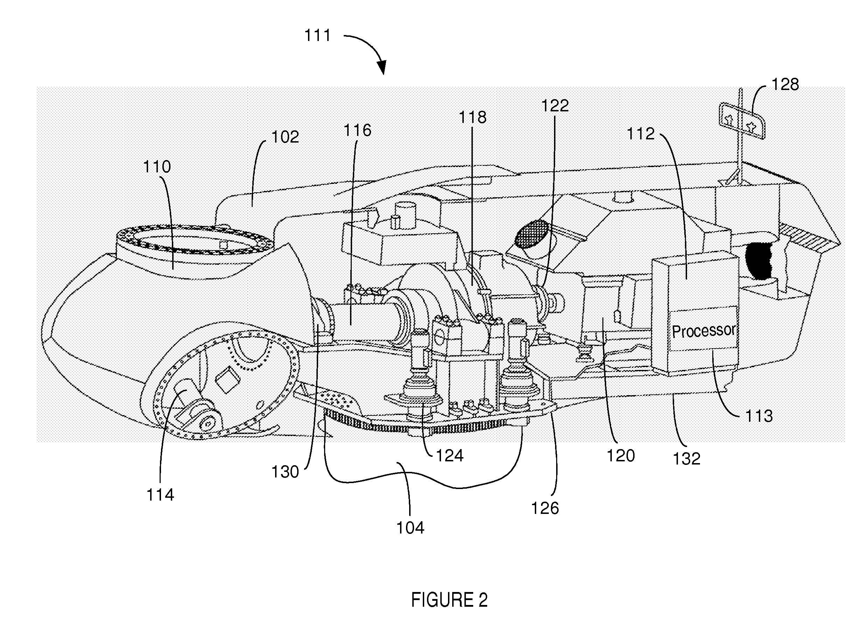

Figure 2 is a diagram of an embodiment of a system 111 including nacelle 102, tower 104, and hub 110. Nacelle 102 houses a control panel 112 including a processor 113. As used herein, the term processor is not limited to just those integrated circuits referred to in the art as a processor, but broadly refers to a controller, a microcontroller, a microcomputer, a programmable logic controller, an application specific integrated circuit, and any other programmable circuit.

Hub 110 includes a variable blade pitch drive 114. Nacelle 102 also houses a portion of main rotor shaft 116, a gear box 118, a generator 120, and a coupling 122. A yaw drive 124 and a yaw deck 126 are housed within nacelle 102. A meteorogical boom 128 is coupled to nacelle 102. Nacelle 102 further houses a main bearing 130 and a main frame 132. Processor 113 controls rotor 106 and components housed within nacelle 102. In an alternative embodiment, processor 113 is located within tower 104 and another processor is located within control panel 112. The other processor controls rotor 106 and components housed within nacelle 102. The other processor communicates with processor 113.

Variable blade pitch drive 114 is provided to control a pitch of blades 108 that drive hub 110 as a result of wind. In an alternative embodiment, a plurality of pitches of blades 108 are individually controlled by blade pitch drive 114.

Main rotor shaft 116, which is a low speed shaft, is connected to hub 110 via main bearing 130 and is connected at an opposite end of shaft 116 to gear box 118. Gear box 118 utilizes a dual path geometry to drive an enclosed high speed shaft operating at a higher speed than main rotor shaft 116. Alternatively, main rotor shaft 116 is coupled directly to generator 120. The high speed shaft is used to drive generator 120, which is mounted on main frame 132. A torque of rotor 106 is transmitted via coupling 122 to generator 120.

Yaw drive 124 and yaw deck 126 provide a yaw orientation system for wind turbine 100. Meterological boom 128 provides information for processor 113 in control panel 112, and the information includes wind direction and/or wind speed. Examples of wind direction includes a left-to-right direction and a right-to-left direction.

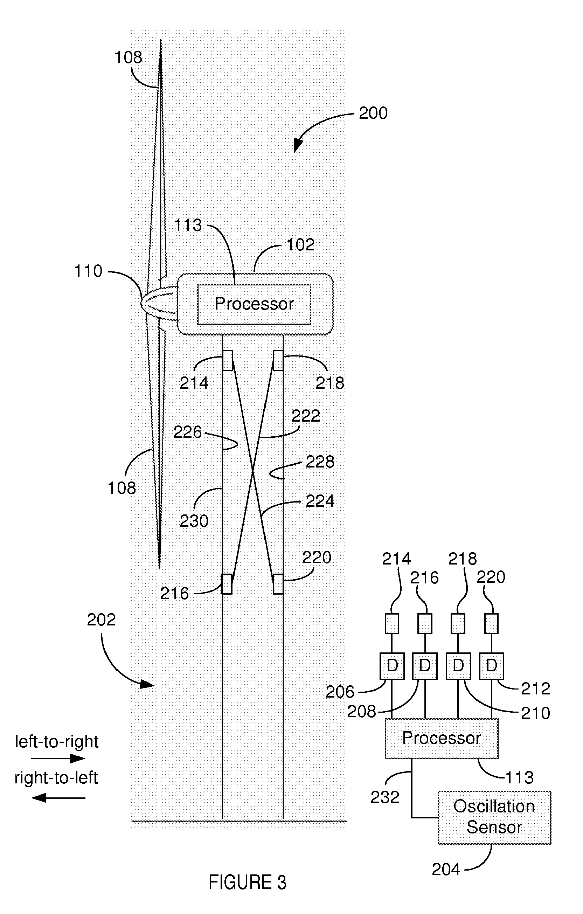

Figure 3 is a diagram of an embodiment of a wind turbine 200, which is an example of wind turbine 100. Wind turbine 200 includes hub 10, rotor blades 108, nacelle 102, a tower 202, an oscillation sensor 204, and a plurality of drivers 206, 208, 210, and 212. Tower 202 is a tubular steel tower and is an example of tower 104. One example of oscillation sensor 204 includes an accelerometer. Drivers 206, 208, 210, and 212 are located inside tower 202. In an alternative embodiment, drivers 206, 208, 210, and 212 are located within nacelle 102. Tower 202 is coupled to a plurality of shock absorbers 214, 216, 218, and 220, and a plurality of beams 222 and 224. Beams 222 and 224 are made of a metal, such as stainless steel and/or carbon steel. An example of any of shock absorbers 214, 216, 218, and 220 includes a hydraulic cylinder. In an alternative embodiment, tower 202 is coupled to more than four shock absorbers 214, 216, 218, and 220. In yet another alternative embodiment, tower 202 is coupled to more than two beams 222 and 224.

Beam 222 is coupled to an inside surface 226 of tower 202 via shock absorber 216 and is coupled to an inside surface 228 of tower 202 via shock absorber 218. As an example, beam 222 is attached, such as riveted and/or clamped, to shock absorbers 216 and 218. As another example, shock absorber 216 is clamped to inside surface 226 and shock absorber 218 is clamped to inside surface 228. Beam 224 is coupled to inside surface 226 of tower 202 via shock absorber 214 and is coupled to inside surface 228 of tower 202 via shock absorber 220. As an example, beam 224 is attached, such as riveted and/or clamped, to shock absorbers 214 and 220. As another example, shock absorber 214 is clamped to inside surface 226 and shock absorber 220 is clamped to inside surface 228. In an alternative embodiment, tower 202 is coupled to shock absorbers 214 and 220 and beam 224 but is not coupled to shock absorbers 216 and 218 and beam 222. In another alternative embodiment, tower 202 is coupled to shock absorbers 216 and 218 and beam 222 but is not coupled to shock absorbers 214 and 220 and beam 224. Oscillation sensor 204 is coupled to a surface, such as inside surface 228 or alternatively an outside surface 230, of tower 202.

Meteorogical conditions, such as wind, create oscillations in tower 202. Oscillation sensor 204 senses the oscillations to generate an electrically sensed signal 232. Processor 113 receives electrically sensed signal 232 as an input and includes a frequency converter, such as a Fourier transform device, to determine an oscillation frequency of electrically sensed signal 232. Processor 113 further determines whether the oscillation frequency of electrically sensed signal 232 is within a range of an eigenfrequency of the oscillations of tower 202. The range of the eigenfrequency depends on a height of tower 104 and a resistance of tower 104 to a force of wind. An example of the range includes a number of oscillations of tower 104 that span 1.5 meters in a first direction and 1.5 meters in a second direction opposite to the first direction per second. The span is measured at a top portion, such as nacelle 102, of tower 104. Another example of the range includes 5-10 oscillations per minute, where each oscillation spans a distance 1.5 meters in the first direction at the top portion and 1.5 meters in the second direction at the top portion. If processor 113 determines that the oscillation frequency is within the range of the eigenfrequency, processor 113 controls at least one of shock absorbers 214, 216, 218, and 220 via at least one of corresponding drivers 206, 208, 210, and 212 to damp the oscillation frequency until the oscillation frequency is outside the range of the eigenfrequency. If processor 113 determines that the oscillation frequency is outside the range of eigenfrequency, processor 113 does not control shock absorbers 214, 216, 218, and 220.

Processor 113 controls at least one of shock absorbers 214, 216, 218, and 220 via at least one of corresponding drivers 206, 208, 210, and 212 to damp the oscillation frequency. For example, if wind is blowing in the left-to-right direction perpendicular to a plane of rotor blades 108, processor 113 controls at least one of shock absorbers 214 and 220 to decrease a length of beam 224. As another example, if wind is blowing in the right-to-left direction perpendicular to the plane of rotor blades 108, processor 113 controls at least one of shock absorbers 216 and 218 to decrease a length of beam 222. As yet another example, if wind is blowing in the left-to-right direction perpendicular to the plane of rotor blades 108, processor 113 controls at least one of shock absorbers 214 and 220 to decrease a length of beam 224 and controls at least one of shock absorbers 216 and 218 to increase a length of beam 222. As still another example, if wind is blowing in the right-to-left direction perpendicular to the plane of rotor blades 108, processor 113 controls at least one of shock absorbers 214 and 220 to increase a length of beam 224 and controls at least one of at least one of shock absorbers 216 and 218 to decrease a length of beam 222.

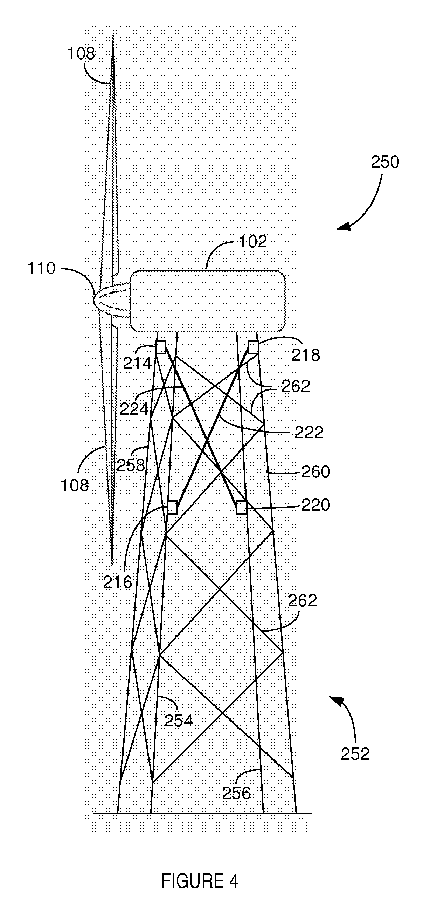

Figure 4 is a diagram of an embodiment of a wind turbine 250, which is an example of wind turbine 100. Wind turbine 250 includes hub 110, rotor blades 108, nacelle 102, and a tower 252. Tower 252 is a lattice tower made of a plurality of steel legs 254, 256, 258, and 260, and a plurality of welded steel profiles 262. Tower 250 is an example of tower 104. Tower 250 is coupled to shock absorbers 214, 216, 218, and 220, and beams 222 and 224. Alternatively, tower 250 is coupled to more than four shock absorbers 214, 216, 218, and 220. In yet another alternative embodiment, tower 202 is coupled to more than two beams 222 and 224.

Beam 222 is coupled to leg 254 via shock absorber 216 and to leg 260 via shock absorber 218. As an example, beam 222 is attached, such as riveted and/or clamped, to shock absorber 218 and shock absorber 218 is clamped to leg 260. As yet another example, beam 222 is attached, such as riveted and/or clamped, to shock absorber 216 and shock absorber 216 is clamped to leg 254. Beam 224 is coupled to leg 256 via shock absorber 220 and to leg 258 via shock absorber 214. As an example, beam 224 is attached, such as riveted and/or clamped, to shock absorber 220 and shock absorber 220 is clamped to leg 256. As yet another example, beam 224 is attached, such as riveted and/or clamped, to shock absorber 214 and shock absorber 214 is clamped to leg 258. Oscillation sensor 204 is attached to any one of steel profiles 262. Optionally, oscillation sensor 204 is attached to any one of legs 254, 256, 258, and 260.

When the meteorogical conditions create the oscillations in tower 252, processor 113 controls at least one of shock absorbers 214, 216, 218, and 220 to damp the oscillation frequency in a similar manner described above with reference to Figure 3.

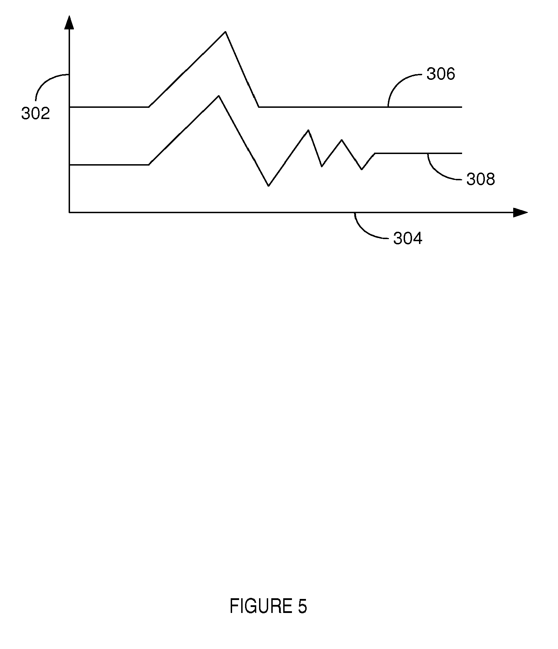

Figure 5 is a graph illustrating an effect of wind on a prior art wind turbine tower that does not include beams 222 and 224 (Figure 4). Wind speed is plotted on a y-axis 302 and time is plotted on an x-axis 304. A plot 306 shows a wind speed with respect to time and a plot 308 shows a displacement, such as the oscillations, of the prior art wind turbine tower. The oscillations of the prior art wind turbine tower are not damped.

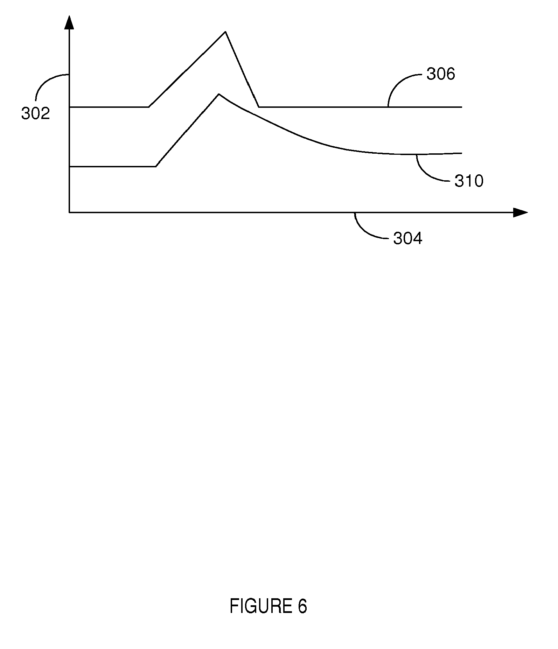

Figure 6 is a graph illustrating an effect of wind on tower 104 (Figure 1) that includes at least one of beams 222 and 224 (Figure 3). A plot 310 shows a displacement, such as the oscillations, of tower 104 with respect to time. It is noted that tower 104 experiences lesser displacement than the displacement experienced by prior art wind turbine towers.

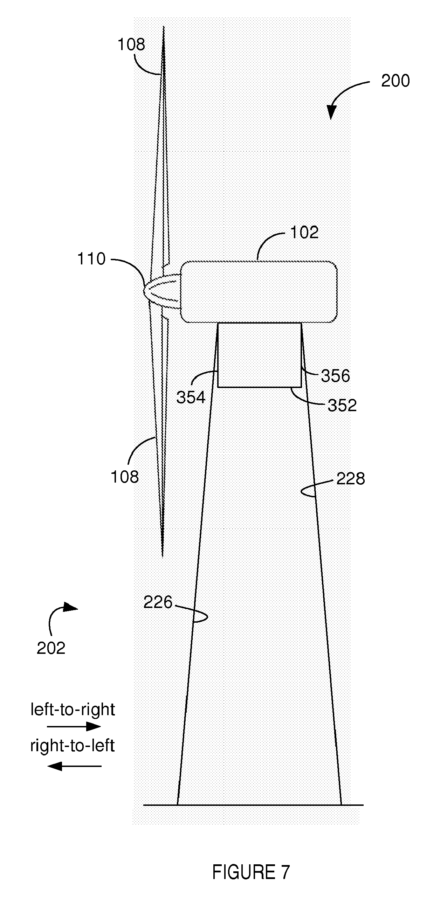

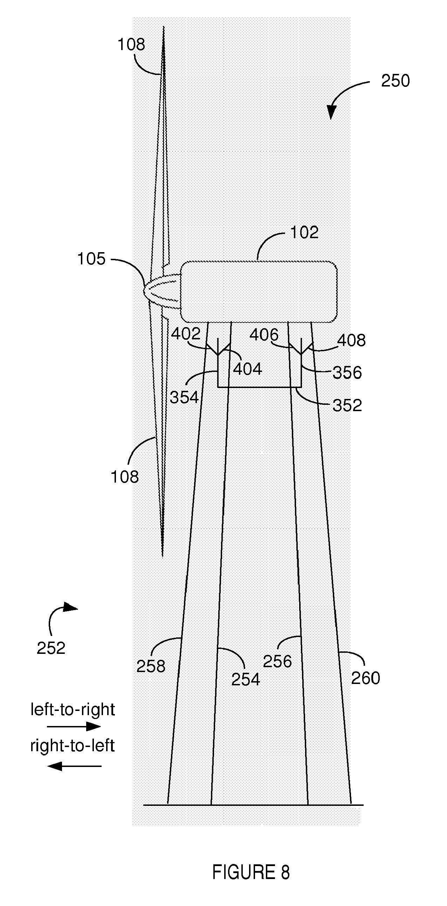

Figure 7 is a diagram of an embodiment of wind turbine 200 in which a water tank 352 is coupled to tower 202. A surface 354 of water tank 352 is attached, such as clamped and/or riveted, to inside surface 226 of tower 202. Another surface 356, located opposite to surface 354, of water tank 352 is also attached, such as clamped or riveted, to inside surface 228 of tower 202. Alternatively, surface 354 of water tank 352 is attached to inside surface 226 of tower 202 via at least one of beams 402 and 404 (shown in Figure 8) made of metal, such as stainless steel and/or carbon steel. Surface 356 of water tank 352 is also attached to inside surface 228 of tower 202 via at least one of beams 406 and 408 (shown in Figure 8) made from the metal. Beams 402 and 404 are attached, such as clamped and/or riveted, to surface 354 of water tank 352 and also attached, such as clamped and/or riveted, to inside surface 226. Beams 406 and 408 are attached, such as clamped and/or riveted, to surface 356 of water tank 352 and also attached, such as clamped and/or riveted, to inside surface 228.

Figure 8 is a diagram of an embodiment of wind turbine 250. Surface 354 of water tank 352 is attached, such as clamped and/or riveted, to beams 402 and 404 and surface 356 of water tank 352 is attached, such as clamped and/or riveted, to beams 406 and 408. Beam 402 is attached, such as clamped and/or riveted, to leg 258 and beam 404 is attached, such as clamped and/or riveted, to leg 254. Moreover, beam 406 is attached, such as clamped and/or riveted, to leg 256 and beam 408 is attached, such as clamped and/or riveted, to leg 260. In an alternative embodiment, beam 402 is attached to one of steel profiles 262 coupled to legs 254 and 258 and beam 404 is also attached to another one of steel profiles 262 coupled to legs 254 and 258. In yet another alternative embodiment, beam 406 is attached to one of steel profiles 262 coupled to legs 256 and 260 and beam 408 is also attached to another one of steel profiles 262 coupled to legs 256 and 260.

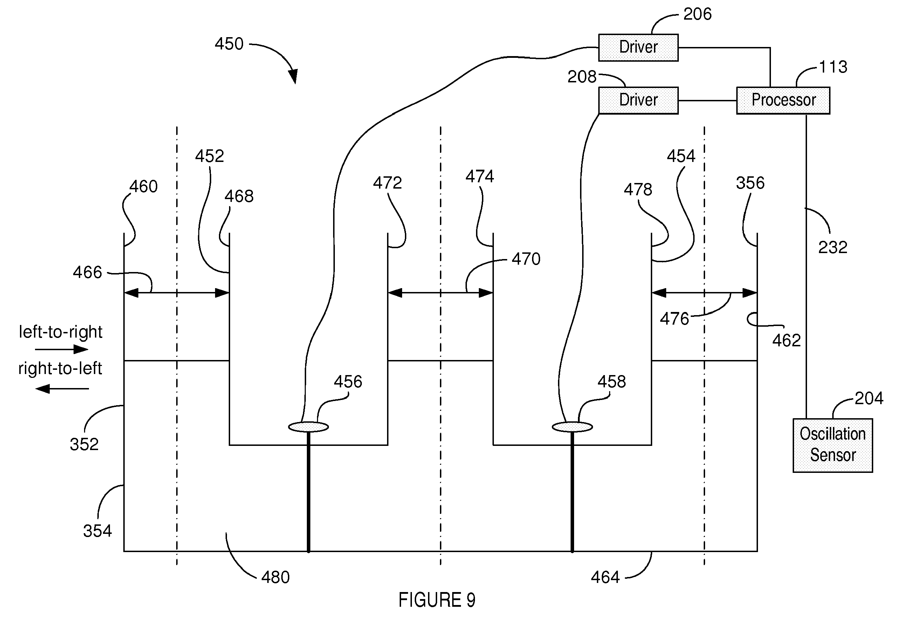

Figure 9 is an embodiment of a system 450 for damping a displacement of tower 100. System 450 includes water tank 352, a plurality of containers 452 and 454, processor 113, and oscillation sensor 204. Containers 452 and 454 are located within water tank 352. Container 452 includes a flow restriction valve 456 and container 454 includes a flow restriction valve 458. Container 452 is attached to an inside surface 460 of water tank 352. For example, container 452 is attached, such as clamped and/or riveted, to a metal rod that is attached, such as clamped and/or riveted, to inside surface 460. Container 454 is also attached to an inside surface 462 of water tank 352. For example, container 454 is attached, such as clamped and/or riveted, to a metal rod that is attached, such as clamped and/or riveted, to inside surface 462. Containers 452 and 454 are located on opposite sides of a center of a bottom side 464 of water tank 352. A perpendicular distance 466 between an outside surface 468 of container 452 and inside surface 460 of water tank 352 is equal to a perpendicular distance 470 between an outside surface 472 of container 452 and an outside surface 474 of container 454. Outside surfaces 468 and 472 are located on opposite sides of flow restriction valve 456. Perpendicular distance 466 is also equal to a perpendicular distance 476 between an outside surface 478 of container 454 and inside surface 462 of water tank 352. Outside surfaces 474 and 478 are located on opposite sides of flow restriction valve 458. In an alternative embodiment, perpendicular distance 466 is unequal to at least one of distances 470 and 476. Water tank 352 includes water 480. In an alternative embodiment, system 450 does not include one of containers 452 and 454.

Oscillation sensor 204 senses the oscillations to generate electrically sensed signal 232. Processor 113 receives electrically sensed signal 232 as an input and determines whether the oscillations are within the range of the eigenfrequency. If processor 113 determines that the oscillations are within the range, processor 113 controls at least one of flow restriction valves 456 and 458 via at least one of drivers 206 and 208 to damp the oscillation frequency until the oscillation frequency is outside the range of the eigenfrequency. If processor 113 determines that the oscillation frequency is outside the range, processor 113 does not control flow restriction valves 456 and 458.

Processor 113 controls at least one of flow restriction valves 456 and 458 via at least one of drivers 206 and 208 to damp the oscillation frequency. For example, if wind is blowing in the left-to-right direction perpendicular to the plane of rotor blades 108, processor 113 opens flow restriction valve 458 and does not open flow restriction valve 456. When flow restriction valve 458 opens, water from water tank 352 flows into container 454 via flow restriction valve 458 until a level of water inside container 454 is equal to a level of water inside water tank 352. Processor 113 opens flow restriction valve 458 until the oscillation frequency is outside the range of the eigenfrequency. Processor 113 closes flow restriction valve 458 upon determining that the oscillation frequency is outside the range. As another example, if wind is blowing in the right-to-left direction perpendicular to the plane of rotor blades 108, processor 113 opens flow restriction valve 456 and does not open flow restriction valve 458. When flow restriction valve 456 opens, water from water tank 352 flows into container 452 via flow restriction valve 456 until a level of water inside container 452 is equal to a level of water inside water tank 352. Processor 113 opens flow restriction valve 456 until the oscillation frequency is outside the range of the eigenfrequency. Processor 113 closes flow restriction valve 456 upon determining that the oscillation frequency is outside the range.

In an alternative embodiment, processor 113 simultaneously controls flow restriction valves 456 and 458 to damp the oscillation frequency. For example, if wind is blowing in the left-to-right direction perpendicular to the plane of rotor blades 108, processor 113 opens flow restriction valve 458 faster than flow restriction valve 456. Processor 113 opens flow restriction valves 456 and 458 until the oscillation frequency is outside the range. Processor closes valves 456 and 458 upon determining that the oscillation frequency is outside the range. As another example, if wind is blowing in the right-to-left direction perpendicular to the plane of rotor blades 108, processor 113 opens flow restriction valve 456 faster than flow restriction valve 458.

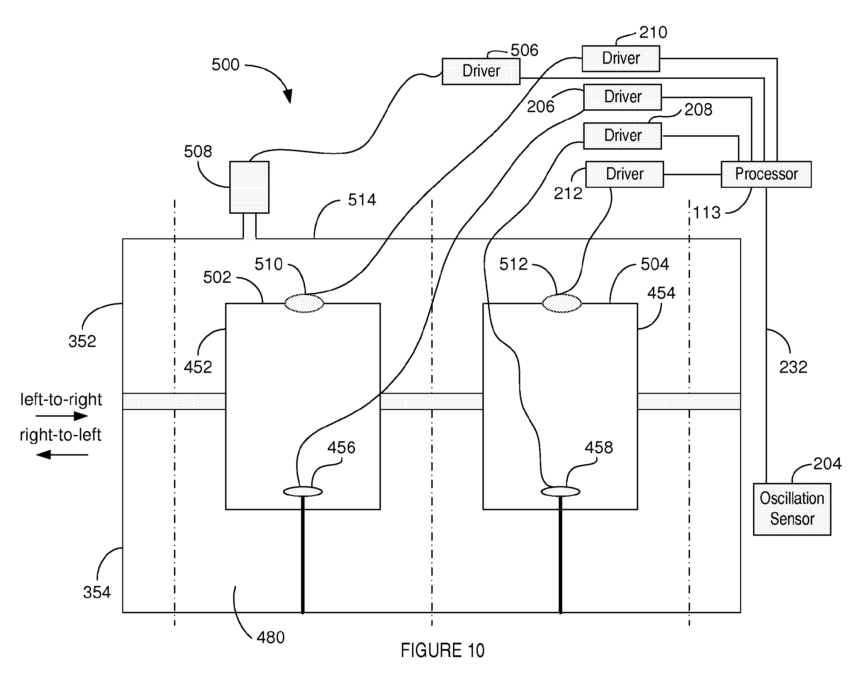

Figure 10 is a diagram of an embodiment of a system 500 for damping a displacement of tower 100. System 500 includes water tank 352, container 452 with a lid 502 and flow restriction valve 456, container 454 with a lid 504 and flow restriction valve 458, drivers 206, 208, 210, and 212, a driver 506, oscillation sensor 204, processor 113, and an air pressure pump 508. Lid 502 includes an air flow valve 510 and lid 504 includes an air flow valve 512. An example of air pressure pump 508 includes an air compressor. Lid 502 is attached, such as welded, to container 452 and lid 504 is also attached, such as welded, to container 454. A lid 514 is also attached, such as welded, to water tank 352. In an alternative embodiment, system 500 includes container 452 with lid 502 and does not include container 454 with lid 504. In another alternative embodiment, system 500 includes container 454 with lid 504 and does not include container 452 with lid 502.

Oscillation sensor 204 senses the oscillations to generate electrically sensed signal 232. Processor 113 receives electrically sensed signal 232 as an input and determines whether the oscillations are within the range of the eigenfrequency. If processor 113 determines that the oscillations are within the range, processor 113 controls at least one of flow restriction valve 456 via driver 206, flow restriction valve 458 via driver 208, air pressure pump 508 via driver 506, air flow valve 510 via driver 210, and air flow valve 512 via driver 212 to damp the oscillation frequency until the oscillation frequency is outside the range of the eigenfrequency. If processor 113 determines that the oscillation frequency is outside the range, processor 113 does not control flow restriction valves 456 and 458, air pressure pump 508, and air flow valves 510 and 512.

Processor 113 controls at least one of flow restriction valve 456, flow restriction valve 458, air pressure pump 508, air flow valve 510, and air flow valve 512 to damp the oscillation frequency. For example, if wind is blowing in the left-to-right direction perpendicular to the plane of rotor blades 108, processor 113 opens air flow valve 512 and does not open air flow valve 510. When air flow valve 512 opens, air from water tank 352 flows into container 454 via air flow valve 512 until a pressure of air inside container 454 is equal to a pressure of air inside water tank 352. Processor 113 opens air flow valve 512 until the oscillation frequency is outside the range of the eigenfrequency. Processor 113 closes air flow valve 512 upon determining that the oscillation frequency is outside the range. As another example, if wind is blowing in the right-to-left direction perpendicular to the plane of rotor blades 108, processor 113 opens air flow valve 510 and does not open air flow valve 512. When air flow valve 510 opens, air from water tank 352 flows into container 452 via air flow valve 510 until a pressure of air inside container 452 is equal to a pressure of air inside water tank 352. Processor 113 opens air flow valve 510 until the oscillation frequency is outside the range of the eigenfrequency. Processor 113 closes air flow valve 510 upon determining that the oscillation frequency is outside the range.

Processor 113 energizes air pressure pump 508 via driver 506 to provide compressed air and to increase a pressure of air inside water tank 352 until the oscillation frequency is within the range. An increase in pressure inside water tank 352 results in an increase in pressure in container 452 when air flows from water tank 352 into container 452 via air flow valve 510. Similarly, an increase in pressure inside water tank 352 results in an increase in pressure in container 454 when air flows from water tank 352 into container 454 via air flow valve 512. Processor 113 deenergizes pump upon determining that the oscillation frequency is outside the range.

In an alternative embodiment, processor 113 simultaneously controls at least two of flow restriction valve 456, flow restriction valve 458, air flow valve 510, air flow valve 512, and air pressure pump 508 to damp the oscillation frequency. For example, if wind is blowing in the left-to-right direction perpendicular to the plane of rotor blades 108, processor 113 opens air flow valve 512 and flow restriction valve 458 faster than air flow valve 510 and flow restriction valve 456. Processor 113 opens air flow valve 512 and flow restriction valve 458 until the oscillation frequency is outside the range. Processor 113 closes air flow valve 512 and flow restriction valve 458 upon determining that the oscillation frequency is outside the range. As another example, if wind is blowing in the right-to-left direction perpendicular to the plane of rotor blades 108, processor 113 opens air flow valve 510 and flow restriction valve 456 faster than flow restriction valve 458 and air flow valve 512. As yet another example, if wind is blowing in the left-to-right direction perpendicular to the plane of rotor blades 108, processor 113 opens air flow valve 512 and flow restriction valve 458 without opening air flow valve 510 and flow restriction valve 456. As still another example, if wind is blowing in the right-to-left direction perpendicular to the plane of rotor blades 108, processor 113 opens air flow valve 510 and flow restriction valve 456 without opening flow restriction valve 458 and air flow valve 512.

As another example, if wind is blowing in the left-to-right direction perpendicular to the plane of rotor blades 108, processor 113 opens air flow valve 512, flow restriction valve 458, and air flow valve 510, and does not open flow restriction valve 456. Processor 113 opens air flow valve 512, flow restriction valve 458, and air flow valve 510 until the oscillation frequency is outside the range. Processor 113 closes air flow valves 510 and 512 and flow restriction valve 458 upon determining that the oscillation frequency is outside the range. As yet another example, if wind is blowing in the right-to-left direction perpendicular to the plane of rotor blades 108, processor 113 opens air flow valve 510, flow restriction valve 456, and air flow valve 512 and does not open flow restriction valve 458. Processor 113 opens air flow valve 510, flow restriction valve 456, and air flow valve 512 until the oscillation frequency is outside the range. Processor 113 closes air flow valve 510, flow restriction valve 456, and air flow valve 512 upon determining that the oscillation frequency is outside the range.

As another example, if wind is blowing in the left-to-right direction perpendicular to the plane of rotor blades 108, processor 113 opens air flow valve 512, flow restriction valve 458, and air flow valve 510 faster than flow restriction valve 456. Processor 113 opens air flow valve 512, flow restriction valve 458, air flow valve 510, and flow restriction valve 456 until the oscillation frequency is outside the range. Processor closes air flow valve 512, flow restriction valve 458, air flow valve 510, and flow restriction valve 456 upon determining that the oscillation frequency is outside the range. As yet another example, if wind is blowing in the right-to-left direction perpendicular to the plane of rotor blades 108, processor 113 opens air flow valve 510, flow restriction valve 456, and air flow valve 512 faster than flow restriction valve 458. Processor 113 opens air flow valve 510, flow restriction valve 456, and air flow valve 512, and flow restriction valve 458 until the oscillation frequency is outside the range. Processor closes air flow valve 510, flow restriction valves 456 and 458, and air flow valve 512 upon determining that the oscillation frequency is outside the range.

Processor 113 controls air pressure pump 508 via driver 506 by either energizing air pressure pump 508 or deenergizing air pressure pump 508. Processor 113 simultaneously controls air pressure pump 508 while controlling at least one of air flow valve 510, flow restriction valve 456, flow restriction valve 458, and air flow valve 512. In an alternative embodiment, processor 113 does not control air pressure pump 508 while simultaneously controlling at least one of air flow valve 510, flow restriction valve 456, flow restriction valve 458, and air flow valve 512.

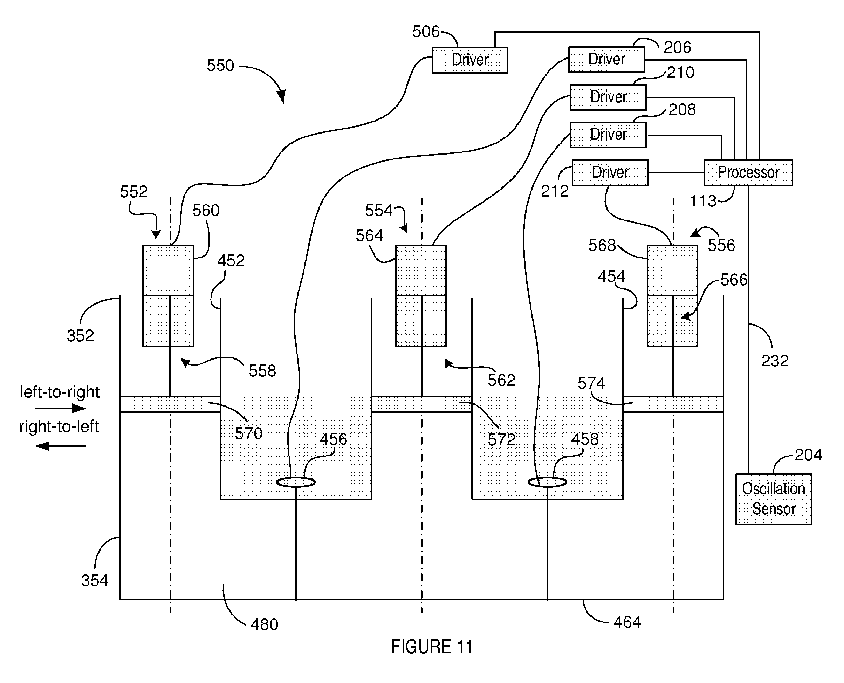

Figure 11 is an embodiment of a system 550 for damping a displacement of tower 100. System 550 includes water tank 352, container 452 with flow restriction valve 456, container 454 with flow restriction valve 458, drivers 206, 208, 210, 212, and 506, oscillation sensor 204, processor 113, and a plurality of hydraulic cylinders 552, 554, and 556. Hydraulic cylinder 552 includes a piston 558 and a housing 560, hydraulic cylinder 554 includes a piston 562 and a housing 564, and hydraulic cylinder 556 includes a piston 566 and a housing 568. Piston 558 includes a piston head 570, piston 562 includes a piston head 572, and piston 566 includes a piston head 574. Piston head 570 seals perpendicular distance 466 (Figure 9), piston head 572 seals perpendicular distance 470 (Figure 9), and piston head 574 seals perpendicular distance 476 (Figure 9). In an alternative embodiment, system 550 does not include all of hydraulic cylinders 552, 554, and 556.

Oscillation sensor 204 detects the oscillations to generate electrically sensed signal 232. Processor 113 receives electrically sensed signal 232 as an input and determines whether the oscillations are within the range of the eigenfrequency. If processor 113 determines that the oscillations are within the range, processor 113 controls at least one of flow restriction valve 456 via driver 206, flow restriction valve 458 via driver 208, hydraulic cylinder 552 via driver 506, hydraulic cylinder 554 via driver 210, and hydraulic cylinder 556 via driver 212 to damp the oscillation frequency until the oscillation frequency is outside the range of the eigenfrequency. If processor 113 determines that the oscillation frequency is outside the range, processor 113 does not control flow restriction valves 456 and 458, and hydraulic cylinders 552, 554, and 556.

Processor 113 controls at least one of hydraulic cylinders 552, 554, and 556 to damp the oscillation frequency. For example, if wind is blowing in the left-to-right direction perpendicular to the plane of rotor blades 108, processor 113 controls piston 558 to protrude and apply force in a downward direction pointing towards bottom surface 464, and controls at least one of pistons 562 and 566 to withdraw and reduce force in the downward direction. As another example, if wind is blowing in the right-to-left direction perpendicular to the plane of rotor blades 108, processor 113 controls piston 566 to protrude and apply force in the downward direction, and controls at least one of pistons 558 and 562 to withdraw and reduce force in the downward direction. As yet another example, if wind is blowing in the left-to-right direction perpendicular to the plane of rotor blades 108, processor 113 controls piston 556 to increase applying force in the downward direction at a rate faster than that of a decrease in force in the downward direction by pistons 562 and 566. As still another example, if wind is blowing in the right-to-left direction perpendicular to the plane of rotor blades 108, processor 113 controls piston 566 to increase applying force in the downward direction at a rate faster than that of an increase in force in the downward direction by pistons 558 and 562.

In an alternative embodiment, processor 113 simultaneously controls at least two of flow restriction valve 456, flow restriction valve 458, hydraulic cylinder 552, hydraulic cylinder 554, and hydraulic cylinder 556 to damp the oscillation frequency. For example, if wind is blowing in the left-to-right direction perpendicular to the plane of rotor blades 108, processor 113 opens flow restriction valve 458, does not open flow restriction valve 456, controls piston 558 to apply force in the downward direction, and controls at least one of pistons 562 and 566 to reduce force in the downward direction. As another example, if wind is blowing in the right-to-left direction perpendicular to the plane of rotor blades 108, processor 113 opens flow restriction valve 456, does not open flow restriction valve 458, controls piston 566 to apply force in the downward direction, and controls at least one of pistons 558 and 562 to reduce force in the downward direction.

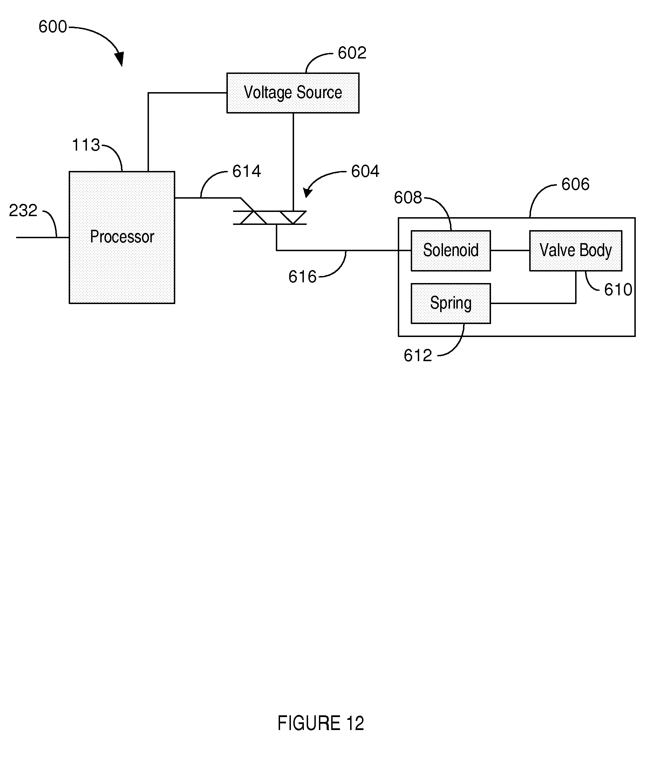

Figure 12 is an embodiment of a system 600 for damping a displacement of tower 100. System 600 includes processor 113, a voltage source 602, such as a direct current voltage source, a triac 604, and a valve 606. Triac 604 is an example of any of driver 206, driver 208, driver 210, driver 212, and driver 506 (Figure 11). Valve 606 is an example of any of flow restriction valve 456, flow restriction valve 458, air flow valve 510, and air flow valve 512 (Figure 10). Valve 606 includes a solenoid 608, a valve body 610, and a spring 612.

Processor 113 receives electrically sensed signal 232 and includes an analog-to-digital converter that converts electrically sensed signal 232 from an analog format to a digital format. Based upon electrically sensed signal 232, processor 113 determines to control valve 606. Processor 113 controls valve 606 by transmitting a processor output signal 614 to triac 604. Triac 604 turns on and generates a triac output signal 616 upon determining that processor output signal 614 is above a threshold of triac 604. Solenoid 608, upon receiving triac output signal 616, generates an electromagnetic field that forces valve body 610 towards an open end of valve 606 and against a force of spring 612. The open end of valve 606 is open to an environment outside valve 606. Motion of valve body 610 against a force of spring 612 compresses spring 612 and opens valve 606 to the environment located outside valve 606.

Based upon electrically sensed signal 232, processor 113 determines not to control valve 606 and does not transmit processor output signal 614. Upon a non-receipt of processor output signal 614, triac 604 determines that processor output signal 614 is below the threshold of triac 605, turns off, and does not generate triac output signal 616. Solenoid 608, upon non-receipt of triac output signal 616, does not generate the electromagnetic field and spring 612 expands. The expansion of spring 612 closes valve 606 by forcing valve body 610 towards a closed end of valve 606. The closed end of valve 606 is not open to the environment outside valve 606.

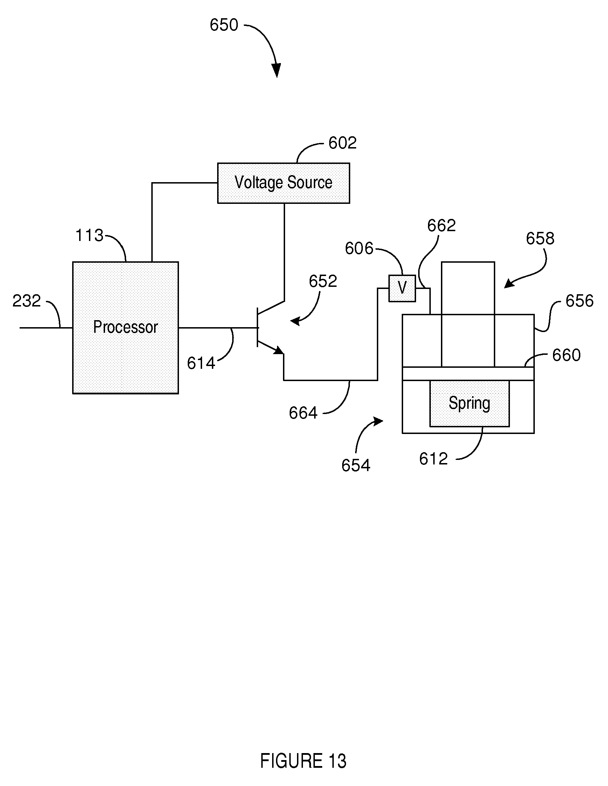

Figure 13 is an embodiment of a system 650 for damping a displacement of tower 100. System 650 includes processor 113, voltage source 602, valve 606, an NPN bipolar junction transistor (BJT) 652, and a hydraulic cylinder 654. Hydraulic cylinder 654 is an example of any of shock absorber 214, shock absorber 216, shock absorber 218, shock absorber 220, hydraulic cylinder 552, hydraulic cylinder 554, and hydraulic cylinder 556 (Figures 4 and 11). NPN BJT 652 is an example of any of driver 206, driver 208, driver 210, driver 212, and driver 506 (Figure 11). In an alternative embodiment, a PNP BJT or alternatively a field effect transistor (FET) is used instead of NPN BJT 652. Hydraulic cylinder 654 includes a housing 656 and a piston 658 including a piston head 660. Housing 656 includes spring 612. Housing 656 is an example of any of housing 560, housing 564, and housing 568 (Figure 11). Piston 658 is an example of any of piston 558, piston 562, and piston 566 (Figure 11). Piston head 660 is an example of any of piston head 570, piston head 572, and piston head 574 (Figure 11). Housing 656 includes a hole that is drilled and threaded. A hose 660 is inserted in the hole. The hole provides an inlet for insertion of oil into housing 656. The hole also provides an outlet to oil that is within housing 656. Housing 656 also includes another hole to provide an inlet and an outlet to air.

Based upon electrically sensed signal 232, processor 113 controls valve 606 by transmitting processor output signal 614 to NPN BJT 652. NPN BJT 652 turns on and generated a BJT output signal 664 upon determining that processor output signal 614 is above a threshold of NPN BJT 652. Valve 606 opens upon receiving BJT output signal 664 and allows oil to flow from a reservoir via hose 662 to housing 656. The flow of oil via hose 662 into housing 656 causes piston head 660 to apply a force in a direction, such as the downward direction, the left-to-right direction, and the right-to-left direction, to compress spring 612. Application of force against 612 decreases a length of any of beams 222 and 224 (Figure 4).

Based upon electrically sensed signal 232, processor 113 does not control hydraulic cylinder 654 and does not transmit processor output signal 614. Upon a non-receipt of processor output signal 614, NPN BJT 652 determines that processor output signal 614 is below the threshold of NPN BJT 652, turns off, and does not generate BJT output signal 664. Valve 606 is closed upon non-receipt of BJT output signal 664 and oil stops flowing from the reservoir to housing 656 via valve 606. Spring 612 expands when valve 606 is closed. The expansion of spring withdraws piston head 660 and reduces force in a direction, such as the downward direction, right-to-left direction, and the left-to-right direction. Reduction in force against spring 612 increases a length of any of beams 222 and 224 (Figure 4).

It is noted that a driver driving a device is not included within a system if the device is not included within the system. For example, if lid 502 with air flow valve 510 is not included within system 500 (Figure 10), driver 210 is not included within system 500.

Technical effects of the systems and methods for damping a displacement of wind turbine tower 100 include damping the oscillation frequency until the oscillation frequency is outside the range of the eigenfrequency. Damping of the oscillation frequency is achieved by making tower 100 oscillate in a direction of wind. For example, if wind oscillates in the left-to-right direction, tower 100 is controlled by processor 113 to oscillate in the left-to-right direction. As another example, if wind oscillates in the right-to-left direction, tower 100 is controlled by processor 113 to oscillate in the right-to-left direction.

While the invention has been described in terms of various specific embodiments, those skilled in the art will recognize that the invention can be practiced with modification within the spirit and scope of the claims.

### PARTS LIST

| | |
|---|---|
| 10 | hub |
| 100 | wind turbine tower |
| 102 | nacelle |
| 104 | tower |
| 106 | rotor |
| 108 | rotor blades |
| 110 | hub |
| 111 | system |
| 112 | control panel |
| 113 | processor |
| 114 | blade pitch drive |
| 116 | shaft |
| 118 | gear box |
| 120 | generator |
| 122 | coupling |
| 124 | yaw drive |
| 126 | yaw deck |
| 128 | meteorogical boom |
| 130 | main bearing |
| 132 | main frame |
| 200 | wind turbine |
| 202 | tower |
| 204 | oscillation sensor |
| 206 | drivers |
| 208 | driver |
| 210 | driver |
| 212 | driver |
| 214 | shock absorbers |
| 216 | shock absorbers |
| 218 | shock absorber |
| 220 | shock absorber |
| 222 | beam |
| 224 | beam |
| 226 | inside surface |
| 228 | inside surface |
| 230 | outside surface |
| 232 | electrically sensed signal |
| 250 | wind turbine |
| 252 | tower |
| 254 | legs |
| 256 | leg |
| 258 | leg |
| 260 | leg |
| 262 | steel profiles |
| 302 | y-axis |
| 304 | x-axis |
| 306 | plot |
| 308 | plot |
| 310 | plot |
| 352 | water tank |
| 354 | surface |
| 356 | surface |
| 402 | beam |
| 404 | beam |
| 406 | beams |
| 408 | beam |
| 450 | system |
| 452 | container |
| 454 | container |
| 456 | flow restriction valve |
| 458 | flow restriction valve |
| 460 | inside surface |
| 462 | inside surface |
| 464 | bottom side |
| 466 | perpendicular distance |
| 468 | outside surface |
| 470 | perpendicular distance |
| 472 | outside surface |
| 474 | outside surface |
| 476 | perpendicular distance |
| 478 | outside surface |
| 480 | water |
| 500 | system |
| 502 | lid |
| 504 | lid |
| 506 | driver |
| 508 | air pressure pump |
| 510 | air flow valve |
| 512 | air flow valve |
| 514 | lid |
| 550 | system |
| 552 | hydraulic cylinders |
| 554 | hydraulic cylinder |
| 556 | hydraulic cylinder |
| 558 | piston |
| 560 | housing |
| 562 | piston |
| 564 | housing |
| 566 | piston |
| 568 | housing |
| 570 | piston head |
| 572 | piston head |
| 574 | piston head |
| 600 | system |
| 602 | voltage source |
| 604 | triac |
| 605 | triac |
| 606 | valve |
| 608 | solenoid |
| 610 | valve body |
| 612 | spring |
| 614 | processor output signal |
| 616 | triac output signal |
| 650 | system |
| 652 | NPN BJT |
| 654 | hydraulic cylinder |
| 656 | housing |
| 658 | piston |
| 660 | piston head |
| 662 | hose |
| 664 | BJT output signal |

## Claims

1. A system (111) for damping a displacement, said system comprising:
a wind turbine tower (104) including a plurality of surfaces (226, 228, 230); and
a processor (113) configured to control a frequency of oscillation of said wind turbine tower by coupling one of a first beam (222) and a water tank (352) to said plurality of surfaces inside said wind turbine tower.

2. A system (111) in accordance with Claim 1 further comprising an oscillation sensor (204) configured to sense an oscillation of the wind turbine tower (104), said processor (113) configured to determine whether a frequency of the oscillation is within a range of an eigenfrequency of the wind turbine tower.

3. A system (111) in accordance with Claim 1 or Claim 2 further comprising a shock absorber (214), wherein the first beam (222) coupled to said surfaces (226, 228, 230) via said shock absorber.

4. A system (111) in accordance with any preceding Claim further comprising:
an oscillation sensor (204) configured to sense an oscillation of the wind turbine tower (104), wherein said processor (113) configured to determine whether a frequency of the oscillation is within a range of an eigenfrequency of the wind turbine tower; and
a shock absorber (214), wherein said first beam (222) coupled to said surfaces (226, 228, 230) via said shock absorber, said processor coupled to said shock absorber, and said processor configured to damp the eigenfrequency of the oscillation of the wind turbine tower by controlling said shock absorber.

5. A system (111) in accordance with any preceding Claim wherein said processor coupled to a valve within the water tank (352).

6. A system (111) in accordance with any preceding Claim further comprising a second beam (224) coupled to said surfaces (226, 228, 230).

7. A system (111) in accordance with any preceding Claim wherein the water tank (352) includes a container (452) that includes a flow restriction valve (456), and said processor (113) configured to damp an eigenfrequency of oscillation of the wind turbine tower (104) by controlling the flow restriction valve and a level of water inside the container.

8. A wind turbine (100) comprising:
a wind turbine tower (104) including a plurality of surfaces (226, 228, 230);
a nacelle (102) supported by said wind turbine tower;
a wind rotor (106) including at least one blade (108) and coupled to said nacelle; and
a processor (113) configured to control a frequency of oscillation of said wind turbine tower by coupling one of a first beam (222) and a water tank (352) to said plurality of surfaces inside said wind turbine tower.

9. A wind turbine (100) in accordance with Claim 8 further comprising an oscillation sensor (204) configured to sense an oscillation of the wind turbine tower (104), said processor (113) configured to determine whether a frequency of the oscillation is within a range of an eigenfrequency of the wind turbine tower.

10. A wind turbine (100) in accordance with Claim 8 or Claim 9 further comprising a second beam (224) coupled to said surfaces (226, 228, 230).
